Europäisches Patentamt

European Patent Office

Office européen des brevets

(11) Numéro de publication : **0 477 085 A1**

# (12) DEMANDE DE BREVET EUROPEEN

(21) Numéro de dépôt : **91402463.3**

(51) Int. Cl.$^5$ : **G01N 3/04**

(22) Date de dépôt : **17.09.91**

(30) Priorité : **20.09.90 FR 9011602**

(43) Date de publication de la demande :
**25.03.92 Bulletin 92/13**

(84) Etats contractants désignés :
**AT DE ES GB NL**

(71) Demandeur : **SOCIETE NATIONALE
INDUSTRIELLE AEROSPATIALE Société dite:
37 Boulevard de Montmorency
F-75781 Paris Cedex 16 (FR)**

(72) Inventeur : **Cussac,Michel
Chemin de la Menau
F-33260 La Teste (FR)**
Inventeur : **Lequertier,Jean-Michel
31,Villepreux Hameau
F-33160 ST Aubin-de-Medoc (FR)**

(74) Mandataire : **Lhuillier, René et al
Cabinet Lepeudry 6, rue du Faubourg
St-Honoré
F-75008 Paris (FR)**

(54) **Dispositif d'essai en traction et compression sur une éprouvette après simulation de rentrée en atmosphère.**

(57)   Une éprouvette 15 soumise à essai est réalisée à partir d'une pastille dans laquelle ont été réalisées deux encoches en forme de demi-lune, et prend appui sur deux épaulements 21 en arc de cercle situés à la base d'une mordache 4 présentant une plaque d'appui striée 20. Deux mordaches sont disposées à l'intérieur d'un mors femelle de l'outillage d'essai.

Application à la mesure de la résistance résiduelle d'une éprouvette après une rentrée atmosphérique.

EP 0 477 085 A1

Jouve, 18, rue Saint-Denis, 75001 PARIS

FIG.4

L'invention concerne un dispositif d'essai en traction et compression destiné particulièrement à mesurer les contraintes résiduelles d'une éprouvette ayant subi une rentrée atmosphérique.

Un matériau ayant subi une rentrée ou une simulation de rentrée atmosphérique peut avoir subi certaines dégradations qui modifient sa résistance et il est important par conséquent d'être en mesure de déterminer une contrainte à rupture résiduelle représentative de l'état dégradé dudit matériau.

Jusqu'à présent les simulations de rentrée atmosphérique font l'objet essentiellement de deux types d'analyses qui sont le contrôle de l'aspect visuel ou l'analyse par perte de masse. Ces analyses paraissent cependant insuffisantes ou imprécises et il apparait donc nécessaire d'obtenir un supplément d'information permettant de quantifier de façon plus fiable cette contrainte résiduelle.

Pour cela on sait réaliser des essais en traction sur une éprouvette réalisée à partir d'une pastille dans laquelle ont été réalisées, de chaque côté, des encoches en forme de demi-lune, qui facilitent la prise de l'éprouvette pour un essai de traction. Ces essais en traction donnant des résultats insuffisants, la Demanderesse a imaginé de les compléter par des essais en compression et mis au point, à cet effet, un dispositif et un outillage appropriés.

L'invention a donc pour objet un dispositif d'essai en traction et compression sur une éprouvette après simulation de rentrée en atmosphère utilisant des mors de traction auto-serrants d'une éprouvette soumise à essai et obtenue à partir d'une pastille dans laquelle ont été réalisées deux encoches en forme de demi-lune, dispositif selon lequel un outillage relié aux mors par des moyens auto-serrants s'ajuste aux arcs de cercle des extrémités de l'éprouvette et est utilisable aussi bien pour des essais en traction que pour des essais en compression.

Selon une caractéristique particulière de l'invention un mors femelle dispose d'un usinage intérieur à pans inclinés se refermant vers le bas, qui renferme deux mordaches de profil correspondant. Chaque mordache se compose essentiellement d'une jambe verticale surmontant une plaque d'appui striée, jambe dont une paroi extérieure est inclinée d'un angle correspondant à l'inclinaison des pans inclinés du mors femelle. De chaque côté de la plaque d'appui, deux épaulements en arc de cercle forment un surplomb par rapport à ladite plaque.

Selon une autre caractéristique de l'invention un mors mâle renferme un écrou moleté agissant par l'intermédiaire d'une tige filetée sur un noyau de manoeuvre pour l'enfoncement des mordaches à l'intérieur du mors femelle.

De plus, à l'intérieur du noyau de manoeuvre, un écrou moleté agit sur un coin de bridage localisé entre les mordaches pour appliquer ledit coin de bridage sur le sommet de l'éprouvette pour les essais de compression.

D'autres caractéristiques particulières de l'invention apparaîtront à la lecture de la description suivante de formes de réalisation prises à titre d'exemples non limitatifs dans lesquels il est fait référence aux dessins annexés qui représentent :

Figures 1 et 2 une vue de face et de profil d'une éprouvette

Figure 3 une vue en coupe de l'outillage d'essai

Figures 4 et 5 une vue de face et de profil d'une mordache

Figure 6 une représentation schématique simplifiée de l'outillage de la figure 3

Figure 7 et 8 des vues schématiques de l'outillage en essai de traction et en essai de compression.

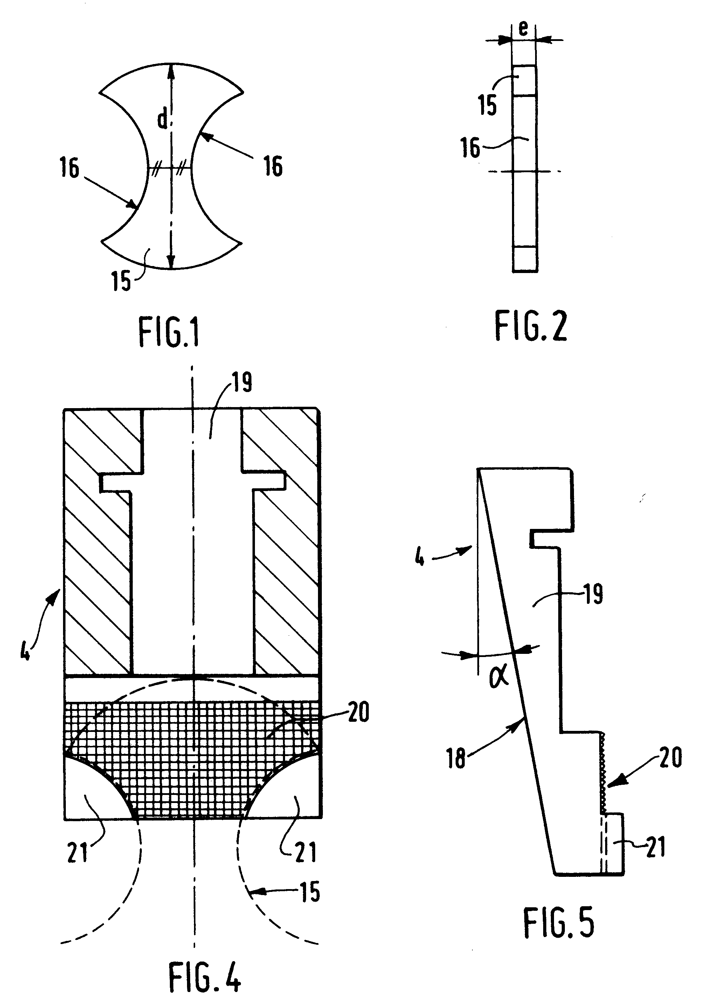

On a représenté aux figures 1 et 2 une éprouvette 15 en forme de pastille de faible épaisseur (par exemple de 3 à 5 mm) par rapport au diamètre (par exemple de l'ordre de 25 mm), pastille dans laquelle on a réalisé symétriquement à un diamètre, deux encoches 16 en forme de demi-lune d'un diamètre relativement important (par exemple 20 mm). Ainsi la traction de l'éprouvette est elle très sensiblement réduite à une valeur judicieuse pour le besoin des essais mécaniques mais aussi pour faciliter la prise de l'éprouvette pour un essai de traction. L'éprouvette en question est ou non protégée contre l'oxydation et aura subi une simulation de rentrée en atmosphère.

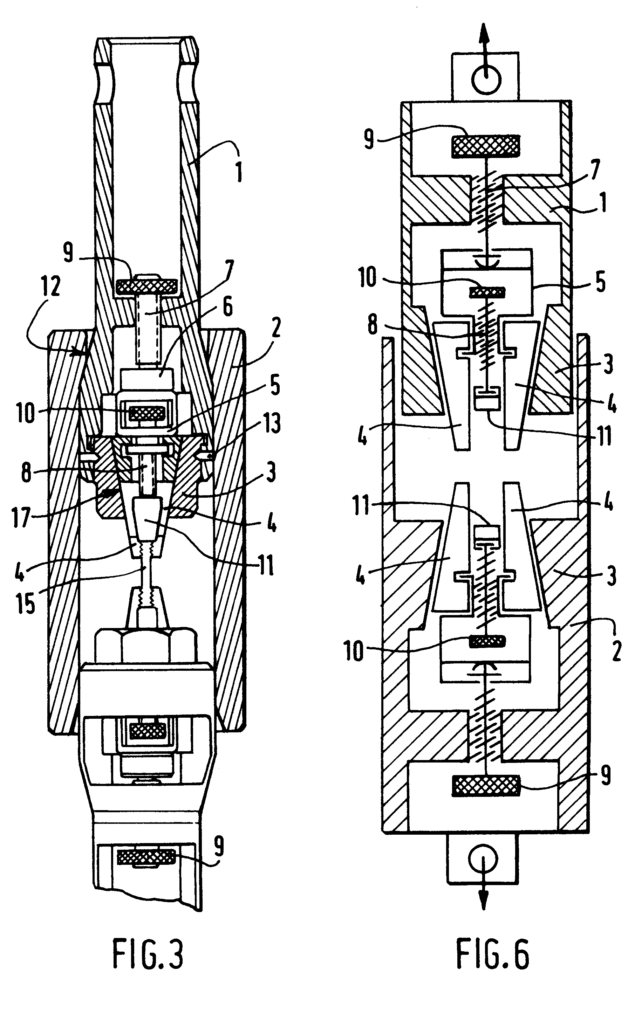

La figure 3 présente un outillage de traction mis au point en vue d'assurer ce type d'essai. Il est constitué d'un mors support mâle 1 qui coopère avec un manchon de guidage 2 par l'intermédiaire de ses parois inclinées 12. Un mors femelle 3 est fixé à l'intérieur de l'extrémité du mors 1 par des vis pointeau 13. Ce mors femelle 3 de forme générale tubulaire dispose d'un usinage intérieur à pans inclinés 17 se refermant vers le bas qui renferme deux mordaches 4 également de profil correspondant en appui sur le mors femelle. A l'intérieur du mors mâle 1, un écrou moleté 9, permet de déplacer une tige filetée 7 en appui sur un bouchon 6 lui-même solidaire d'un noyau de manoeuvre 5. A l'intérieur du noyau, un autre écrou moleté 10 peut agir sur une autre tige filetée 8 dont l'extrémité inférieure est en butée contre un coin de bridage 11 localisé à l'intérieur du mors femelle, entre les mordaches 4. Le profil d'extrémité du coin de bridage est arrondi pour s'appliquer exactement sur le bord arrondi de l'éprouvette.

Le manchon 2 renferme à sa partie inférieure un autre mors mâle identique 2. Les mordaches 4 de chaque mors enserrent l'éprouvette 15 soumise aux essais de traction.

Chaque mordache 4 est représentée plus en détail aux figures 4 et 5. Elle se compose essentiellement d'une jambe verticale 19 surmontant une plaque d'appui 20, jambe dont une paroi extérieure 18 est inclinée d'un angle $\alpha$ d'environ 10° par rapport à la verticale, correspondant à l'inclinaison des pans inclinés 17 du mors femelle. La plaque d'appui 20 à la partie inférieure de la mordache 4 est striée ce qui améliore le serrage avec l'éprouvette. De chaque coté de cette plaque d'appui 20 deux épaulements 21 en arc de cercle forment un surplomb par rapport à ladite plaque striée. L'arc de cercle a le même rayon que celui des encoches 16 en demi-lunes prévues sur l'éprouvette 15. Grâce à cette disposition particulière l'éprouvette se positionne en appui sur les deux épaulements 21, comme on le voit en pointillés à la figure 4. La figure 6 est une représentation schématique simplifiée de l'outillage montré à la figure 3. Les mors femelle 3 sont schématisés par des rebords inclinés prévus sur le mors mâle 1 et sur le manchon 2. On voit aussi les tiges filetées 7 et 8 reliant les écrous moletés 9 et 10 et bien entendu les mordaches 4 et coins de bridage 11.

L'éprouvette étant ainsi maintenue entre les mordaches 4 de chaque mors (figure 3), on agit sur les écrous moletés 9 ce qui a pour effet de déplacer la tige 7 dans le sens d'une compression du noyau 5 et de l'enfoncement des mordaches 4 à l'intérieur du mors femelle 3 ce qui se traduit par une accentuation du serrage des surfaces striées 20 sur l'éprouvette, grâce à la pente de la paroi 18. Le serrage de l'éprouvette étant ainsi assuré, on procède à un essai en traction.

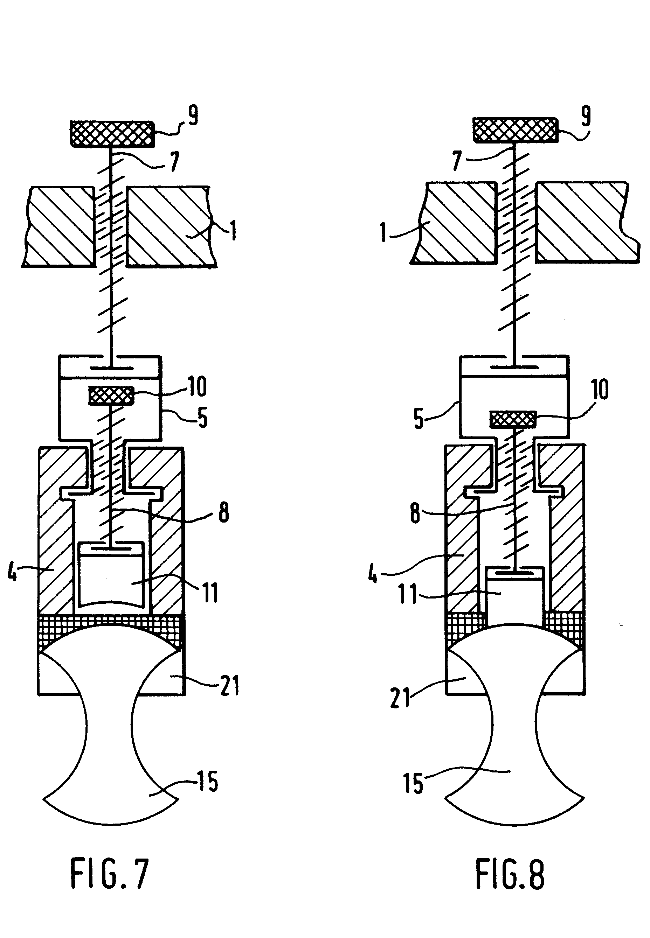

Pour cela on tire les deux mors mâle 1 en sens opposé. L'éprouvette étant en appui contre les épaulements 21 des mordaches 4 s'ajuste de chaque côté de celles-ci sur les deux arcs de cercle usinés. L'action de traction sur les mors 1 accenture l'action de serrage des mordaches 4 dans les mors femelle 3, du fait de la pente de leur paroi 18. Ce serrage latéral auto-serrant, qui s'amplifie avec la charge permet de soutenir l'éprouvette pendant l'essai, la surface striée 20 évitant le ripage de la pièce serrée entre les mordaches et l'éprouvette. La figure 7 montre schématiquement ce qui se passe lors de cet essai en traction. Dans ce cas la position relative de la tige filetée 7 et du noyau 5 par rapport au mors mâle 1 reste inchangée. Par contre la tige filetée 8 et son écrou moleté 10 pouvant se déplacer librement à l'intérieur du noyau 5 remontent à l'intérieur du mors femelle. Le coin de bridage 11 s'écarte alors de l'éprouvette.

Quand on veut effectuer un essai en compression, comme l'illustre la figure 8, on agit sur l'écrou moleté 10 pour appliquer, à l'aide de la tige filetée 8, le coin de bridage 11 sur le sommet de l'éprouvette. Par action en sens inverse, on comprime l'éprouvette à l'aide des coins de bridages opposés.

Ainsi le même outillage ajustable avec les arcs de cercle des extrémités de l'éprouvette peut-il servir à la fois pour des essais en traction et des essais en compression, sans que des amorces de ruptures par cisaillement, au niveau des contacts avec l'outillage, ne puissent se produire durant les essais en traction.

Les essais ainsi effectués permettent d'apporter un supplément d'information pour la quantification de la résistance résiduelle en traction ou en compression d'un matériau après une rentrée atmosphérique.

**Revendications**

1) Dispositif d'essai en traction et compression sur une éprouvette après simulation de rentrée en atmosphère utilisant des mors de traction auto-serrants, d'une éprouvette soumise à essai et obtenue à partir d'une pastille dans laquelle ont été réalisées deux encoches en forme de demi-lune caractérisé en ce que un outillage (4,11,21) relié aux mors (1,3) par des moyens auto-serrants s'ajuste aux différents arcs de cercle des extrémités de l'éprouvette (15) et est utilisable aussi bien pour des essais en traction que pour des essais en compression.

2) Dispositif selon la revendication 1 caractérisé en ce qu'un mors femelle (3) dispose d'un usinage intérieur à pans inclinés (17) se refermant vers le bas, qui renferme deux mordaches (4) de profil correspondant.

3) Dispositif selon la revendication 2 caractérisé en ce que chaque mordache (4) se compose essentiellement d'une jambe verticale (19) surmontant une plaque d'appui striée (20), jambe dont une paroi extérieure (18) est inclinée d'un angle $\alpha$ correspondant à l'inclinaison des pans inclinés (17) du mors femelle.

4) Dispositif selon les revendications 2 et 3 caractérisé en ce que de chaque coté de la plaque d'appui (20), deux épaulements (21) en arc de cercle forment un surplomb par rapport à ladite plaque.

5) Dispositif selon les revendications 1 et 2 caractérisé en ce qu'un mors mâle (1) renferme un écrou moleté (9) agissant par l'intermédiaire d'une tige filetée (7) sur un noyau de manoeuvre (5) pour l'enfoncement des mordaches (4) à l'intérieur du mors femelle.

6) Dispositif selon les revendications 1,2 et 5 caractérisé en ce qu'à l'intérieur du noyau de manoeuvre (5), un écrou moleté (10) agit sur un coin de bridage (11) localisé entre les mordaches (4) pour appliquer ledit coin de bridage sur le sommet de l'éprouvette.

7) Dispositif selon les revendications 1 et 6, caractérisé en ce que le profil d'extrémité du coin de bridage (11) est arrondi pour s'appliquer exactement sur le sommet arrondi de l'éprouvette.

FIG.1

FIG.2

FIG.4

FIG.5

FIG.3

FIG.6

FIG.7

FIG.8

EP 0 477 085 A1

Office européen
des brevets

**RAPPORT DE RECHERCHE EUROPEENNE**

Numero de la demande

EP    91 40 2463

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | INDUSTRIAL LABORATORY<br>vol. 41, no. 11, Novembre 1975, NEW YORK<br>page 1743;<br>KATS: 'GRIP FOR TENSILE TESTING OF BRITTLE MATERIALS'<br>* le document en entier *<br>--- | 1,4 | G01N3/04 |
| A | US-A-1 496 803 (AMSLER)<br>* page 1, ligne 34 - ligne 43 *<br>* page 2, ligne 43 - ligne 53; figure 1 *<br>--- | 1 | |
| A | DE-A-3 420 717 (BETSCHART)<br>* page 1; revendication 1; figures 1,2,8 *<br><br>----- | 1,6 | |

**DOMAINES TECHNIQUES RECHERCHES (Int. Cl.5)**

G01N

Le présent rapport a été établi pour toutes les revendications

| Lieu de la recherche | Date d'achèvement de la recherche | Examinateur |
|---|---|---|
| LA HAYE | 20 DECEMBRE 1991 | MILLS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)